# EUROPEAN PATENT SPECIFICATION

(11) **EP 3 016 352 B1**
(45) Date of publication and mention of the grant of the patent: **06.02.2019**
(21) Application number: 14191553.8
(22) Date of filing: 03.11.2014
(51) Int. Cl.: H04W 4/38, H04W 4/70, H04L 29/14, H04L 29/08, H04W 84/18, H04B 17/11

(54) **Method of managing sensor network**
Verfahren zum Verwalten eines Sensornetzwerksystems
Procédé de gestion de réseau de capteurs

(43) Date of publication of application: 04.05.2016
(73) Proprietor: FUJITSU LIMITED, Kawasaki-shi, Kanagawa 211-8588 (JP)
(72) Inventor: Walker, Brent, Ealing W13 8AB (GB); Li, Michael, Hayes Middlesex UB3 2PP (GB)
(74) Representative: Haseltine Lake LLP

(56) References cited:
- WO-A1-2013/060018
- US-A- 5 835 886
- US-A1- 2008 262 798
- US-A1- 2009 002 148
- ZAHEDI S ET AL: "Tiered architecture for on-line detection, isolation and repair of faults in wireless sensor networks", MILITARY COMMUNICATIONS CONFERENCE, 2008. MILCOM 2008. IEEE, IEEE, PISCATAWAY, NJ, USA, 16 November 2008 (2008-11-16), pages 1-7, XP031408428, ISBN: 978-1-4244-2676-8
- THEMISTOKLIS BOURDENAS ET AL: "Self-healing for Pervasive Computing Systems", 1 September 2010 (2010-09-01), ARCHITECTING DEPENDABLE SYSTEMS VII, SPRINGER BERLIN HEIDELBERG, BERLIN, HEIDELBERG, PAGE(S) 1 - 25, XP019157494, ISBN: 978-3-642-17244-1 * page 2, line 6 - line 19; figure 1 * * page 3, line 21 - line 30 * * chapter 3.1; page 8 - page 10; figure 6 * * chapter 4.1; page 11 - page 13; figure 7 * * chapter 4.2, paragraph "homogenoeus collaboration"; page 14 - page 15 * * chapter 4.3; page 16 - page 17 *
- TAKRURI M ET AL: "Data fusion techniques for auto calibration in wireless sensor networks", INFORMATION FUSION, 2009. FUSION '09. 12TH INTERNATIONAL CONFERENCE ON, IEEE, PISCATAWAY, NJ, USA, 6 July 2009 (2009-07-06), pages 132-139, XP031512099, ISBN: 978-0-9824438-0-4
- GAGE J ET AL: "Sensing Assessment in Unknown Environments: A Survey", IEEE TRANSACTIONS ON SYSTEMS, MAN AND CYBERNETICS. PART A:SYSTEMS AND HUMANS, IEEE SERVICE CENTER, PISCATAWAY, NJ, US, vol. 40, no. 1, 1 January 2010 (2010-01-01), pages 1-12, XP011344804, ISSN: 1083-4427, DOI: 10.1109/TSMCA.2009.2033028
- MURPHY R R ET AL: "Sfx: An Architecture For Action-oriented Sensor Fusion", PROCEEDINGS OF THE IEEE/RSJ INTERNATIONAL CONFERENCE ON INTELLIGENT ROBOTS AND SYSTEMS. RALEIGH, NC., JULY 7 - 10, 1992; [PROCEEDINGS OF THE IEEE/RSJ INTERNATIONAL CONFERENCE ON INTELLIGENT ROBOTS AND SYSTEMS], NEW YORK, IEEE, US, vol. 2, 7 July 1992 (1992-07-07), pages 1079-1086, XP010223156, ISBN: 978-0-7803-0738-4
- KOKAR M ET AL: "Review of multisensor data fusion architectures and techniques", INTELLIGENT CONTROL, 1993., PROCEEDINGS OF THE 1993 IEEE INTERNATIONAL SYMPOSIUM ON CHICAGO, IL, USA 25-27 AUG. 1993, NEW YORK, NY, USA,IEEE, 25 August 1993 (1993-08-25), pages 261-266, XP010137301, DOI: 10.1109/ISIC.1993.397703 ISBN: 978-0-7803-1206-7

## Description

### Field of the Invention

The present invention relates to a method for maintaining and calibrating sensors in a sensor network, more particularly but not exclusively an environmental sensor network, as well as to a sensor network itself and apparatus for use in a sensor network.

### Background of the Invention

Networks of sensors have historically been important in many fields such as aeronautics, meteorology and climatology, and are becoming increasingly important for applications such as smart metering, autonomous cars and unmanned aerial vehicles.

However, the high maintenance cost of networks of sensors is an impediment to their wider deployment in both developed and less developed countries. Individual sensors require maintenance including periodic calibration, repair or replacement in order to produce accurate measurements, but the cost of such maintenance may be prohibitive. Once the sensors are deployed, the methodology used to operate the network of sensors may not maximize the information that could be provided by the network.

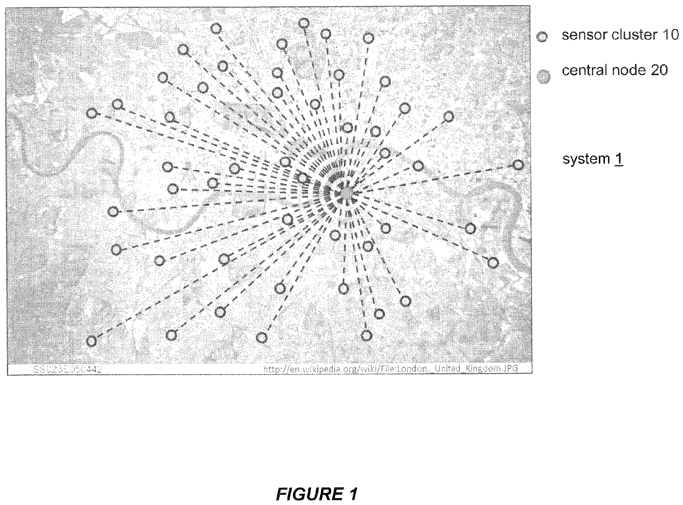

As an example of an environmental sensor network, a network of sensors for monitoring a drainage system of a city including storm water drains and sewers is illustrated in Figure 1. (Incidentally, in this specification the term "network" will be used to denote the assembly of sensors, with "system" generally reserved for the entity, parameters of which are being monitored by the sensors).

Figure 1 shows in simplified form a network 1 of sensors comprising a plurality of groups of sensors, or "sensor clusters" 10, each denoted by a lightly-shaded disk in the Figure, and connected (as indicated by dashed lines) to a central node 20 (for example a "calibrator coordinator" of embodiments to be described), denoted by the dark-shaded disk at the convergence point of the dashed lines. The sensor clusters 10 make measurements at their respective locations and send them to the central node 20.

In Figure 1, the sensor clusters 10 are shown superimposed on a city map to indicate that the sensors are deployed at various locations in the city. In this example a city authority would be responsible for monitoring the network through the central node 20 for potential problems, and undertaking maintenance work on both the drainage system and the sensor network as required.

To maximize the information that can be provided by sensor networks, "sensor fusion" is one technique which may be applied. Sensor fusion is the combining of sensor data from different sensors (and preferably, different kinds of sensors) to achieve a result which is more informative than the sensor data individually. A distinction can be drawn between "direct fusion" of sensor data only (including historical data), and "indirect fusion" incorporating other kinds of information such as human input. Where the fusion takes place is also of relevance: thus, sensor fusion may occur locally (e.g. at the level of a sensor cluster 10 in Fig. 1) or centrally, or both. Sensor fusion is a kind of "data fusion", and both terms will be used below.

Methods for combining sensor data in sensor fusion include the Kalman filter technique, which produces, from a time series of measurements each subject to uncertainty (noise), estimates of unknown variables that tend to be more precise than those based on a single measurement alone. The technique includes prediction and updating phases. In the prediction phase, based on a model of the system being monitored, the Kalman filter produces estimates of the current state variables along with their uncertainties. The uncertainty or "covariance" of the overall system state is also determined. Then, in the update phase, the next measurement is input and the estimates are updated using a weighted average, with more weight being given to estimates with higher certainty. Being recursive, this technique requires only the present input measurement and the previously calculated state including its uncertainty.

Replacing or manually recalibrating the sensors may be difficult and dangerous, for instance due to build-up of gases, and toxic or other dangerous materials making their way into the drainage system. For these reasons, maintenance of such a sensor network is expensive. However, maintaining drainage systems in good order is an important step in avoiding floods in urban areas, so the value of sensor networks for monitoring the state of the drainage system is substantial.

Typically, sensors will have a limited lifetime due to environmental factors (heat or cold, exposure to sunlight, or battery depletion) and will therefore need replacing from time to time. Maintaining records of the individual histories of the sensors would allow some sensors to be used longer than if only the average lifetimes or expected failure times are considered, as some sensors may still be functioning acceptably even though they are older than others. Furthermore, correlations between sensors could allow the working life of functional sensors to be extended and avoid premature decommissioning. To date, however, such measures have not found widespread use.

Innovation in the proper management, calibration and determination of measurements will be important for the deployment of future networks of sensors. Better management of the sensor network would allow more information to be extracted from a given distribution of sensors so that the ratio of costs to benefits is more favourable. Also desirable would be the identification of sensors which should be decommissioned and hence the prioritization of sensor replacement based on individual sensor performance rather than age or a priori expected failure rates.

There is consequently a need for improved management of sensors in sensor networks such as environmental sensor networks.

ZAHEDI S ET AL: "Tiered architecture for on-line detection, isolation and repair of faults in wireless sensor networks", MILITARY COMMUNICATIONS CONFERENCE 2008 IEEE PISCATAWAY NJ USA, 16 November 2008 (2008-11-16), pages 1-7, XP031408428, discloses a method, a sensor network and an apparatus in accordance with the preamble of each independent claim. In a two-tier system, a local tier detects sensor faults by using an embedded model of the physical world and a hypothesis-testing detector to identify faults in sensor measurements and notify these to a global tier. The global tier generates feedback to update the embedded physical world model.

THEMISTOKLIS BOURDENAS ET AL: "Self-healing for Pervasive Computing Systems", 1 September 2010 (2010-09-01), ARCHITECTING DEPENDABLE SYSTEMS VII SPRINGER BERLIN HEIDELBERG, pages 1 - 25, XP019157494, discloses a self-managed cell which is an autonomous management domain for a set of sensors. Observations from the set of sensors are aggregated at a fusion point to reduce errors.

TAKRURI M ET AL: "Data fusion techniques for auto calibration in wireless sensor networks", INFORMATION FUSION 2009 FUSION 09 12TH INTERNATIONAL CONFERENCE ON, IEEE, PISCATAWAY, NJ, USA, 6 July 2009 (2009-07-06), pages 132-139, XP031512099, discloses detecting and correcting sensor measurement errors at each sensor node by utilising a spatio-temporal correlation with neighbour sensors.

US 2008/0262798 A1 discloses techniques for verifying measurement data received from a cluster of sensors in terms of integrity, confidentiality and authenticity of the data. WO2013/0600198 A1 discloses reporting observations from a sensor system to external users who provide a rating with respect to quality of the observations.

US2009/0002148 A1 discloses a sensor monitoring system that identifies inaccurate or degraded sensor data on the basis of predictive models of sensor health.

Thus, the prior art may enable reliability of sensors to be assessed based on modelling and/or prediction. However, the prior art does not allow environment-dependent performance degradation of sensors to be taken into account when assessing the reliability of the sensors.

### Summary of the Invention

According to a first aspect of the present invention, there is provided a method of managing a sensor network comprising:
providing a plurality of sensor clusters, each sensor cluster having a plurality of sensors, and providing a calibrator coordinator in communication with the sensor clusters;
at each sensor cluster, obtaining by a sensor coupler measurements of values of one or more parameters from the sensors, performing first processing on the measurements to obtain at least one first result, and forwarding information to the calibrator coordinator;
at the calibrator coordinator, performing second processing on the information received from the sensor clusters to obtain at least one second result, and feeding back the second result to the sensor clusters; and
at each sensor cluster, assessing by a sensor coupler reliability of the sensors by employing the first and second results;
characterised by, at each sensor cluster, determining by a sensor coupler an environment-dependent performance degradation of each sensor, and if indicated by the determination, excluding future measurement values of the sensor from the information sent to the calibrator coordinator, wherein the environment-dependent performance degradation is determined by use of an environmental exposure counter associated with each of the respective sensors, each counter configured to characterize the environmental conditions and the environment-dependent performance degradation of the respective sensor.

In other words, the sensors are checked based on two levels of processing: processing local to the sensor cluster, and processing in the calibrator coordinator which receives information from all the sensor clusters.

In the above method, preferably but not exclusively, the parameters are environmental parameters and the network is an environmental sensor network for monitoring such parameters as water level, traffic, air or water pollution, and so forth.

It is assumed that the values of the one or more parameters are subject to variation over time. Preferably, the network operates in successive time periods of operation, during each of which the above mentioned steps subsequent to the "providing" step are carried out. The duration of this time period may be selected to capture the variation just referred to.

The information forwarded to the calibrator coordinator by each sensor cluster preferably includes at least one of:
- the measurements from at least the sensors in the sensor cluster assessed as reliable; and
- a best estimate value of the one or more parameters.

The second result, obtained in the second processing by the calibrator coordinator, may comprise at least one of:
- best estimate values of the one or more parameters at the locations of the sensors in the sensor cluster; and
- a recommendation or instruction to calibrate or decommission at least one of the sensors.

In this way, the network can use the results of processing at both levels of sensor cluster and calibrator coordinator to assess whether sensors are reliable (that is to say, whether measurement values thereof can be trusted). That is, if a given sensor value does not fit the expected value from a system model (either in sensor fusion at the sensor cluster, or data fusion at the calibrator coordinator) this sensor is marked for calibration or decommissioning. Here, "system" refers to the entity (a citywide drainage system for example) one or more parameters of which are sensed by the sensors.

A sensor may thus be put in a calibration mode, in which mode the sensor continues to make measurements but such measurements are excluded from the information sent to the calibrator coordinator. The measurements may however continue to be used internally by the sensor cluster, in particular to judge whether or not the sensor has been successfully recalibrated.

The effect of calibration upon measurements from the sensor may be monitored over time by employing the second result, and in dependence on the result, the sensor cluster may:
- leave the sensor in calibration mode; or
- place the sensor in a measurement mode in which its measurements are included in the first processing; or
- place the sensor in a decommissioned mode in which no further measurements are obtained from the sensor.

Here, preferably, monitoring the effect of calibration includes, for a plurality of time intervals of operation, comparing the measurements with values expected based on the second result, the sensor being placed in the measurement mode when a predetermined number of successive measurements match the values expected.

In any method as defined above, the first processing preferably comprises sensor fusion combining the measurement values of the sensors (unless excluded) with a system model in the sensor cluster to yield a best estimate of the values of the one or more parameters for each sensor as part (or all) of the information for forwarding to the calibrator coordinator. The first processing may also involve sensor fusion even including measurements from sensors in calibration mode, obtaining the above mentioned "first result" for assessing reliability of sensors in the same cluster. Thus, the "first result" referred to above is not necessarily the same as the information supplied to the calibrator coordinator.

Likewise, the second processing preferably comprises data fusion of the information forwarded from the sensor clusters, the second result including a best estimate of the values of the one or more parameters for each sensor/sensor cluster. (The term "data fusion" is used here in place of "sensor fusion" to avoid confusion; however the fusion process is conceptually similar to, albeit at a higher level than, the sensor fusion in the sensor cluster). That is, preferably, both the sensor cluster and the calibrator coordinator can estimate the values which each sensor may be expected to measure at each time interval of operation in the system. In this way the calibrator coordinator may detect a need for calibration of a particular sensor even if this has been missed by the sensor coupler. The estimates from the calibrator coordinator may be more accurate since the calibrator coordinator has access to more information, including possibly information from sources outside the sensor system and/or human input.

Here, the data fusion preferably employs a model of a system of which the one or more parameters are characteristics, and the second processing includes incorporating the first results into the model. An example of this kind of technique is the Kalman filtering referred to in the introduction.

In any case, the second processing may include detecting that a problem exists with respect to a sensor cluster on the basis of the received information, the calibrator coordinator feeding back an indication of the problem to the sensor cluster concerned. This indication may be in the form of an instruction to calibrate or decommission the sensor as already mentioned.

According to a second aspect of the present invention, there is provided a sensor network comprising:
a plurality of sensor clusters, each sensor cluster having a plurality of sensors and a sensor coupler, and
a calibrator coordinator in communication with the sensor clusters; wherein the sensor coupler of each sensor cluster is arranged to obtain measurements of values of one or more parameters from the sensors, to perform first processing on the measurements to obtain at least one first result, and to forward information to the calibrator coordinator; and
the calibrator coordinator is arranged to perform second processing on the information received from the sensor clusters to obtain at least one second result, and to feed back the second result to the sensor clusters; wherein in each sensor cluster, the sensor coupler is arranged to employ the first and second results to assess reliability of the sensors; this can include deciding whether to take account of future measurements of those sensors in the information sent to the calibrator coordinator;
   characterised by an environmental exposure counter associated with each of the respective sensors, each counter configured to characterize the environmental conditions and the environment-dependent performance degradation of the respective sensor, wherein the sensor coupler is further arranged to determine an environment-dependent performance degradation of each sensor, and if indicated by the determination, exclude future measurement values of the sensor from the information forwarded to the calibrator coordinator.

The above network may have any of the features referred to above with respect to the method of the invention.

According to a third aspect of the present invention, there is provided an apparatus for use as a sensor coupler in a sensor network and comprising:
receiving means connected to a plurality of sensors forming a cluster, and arranged to obtain from the sensors measurements of values of one or more parameters of a system; and
processing means arranged to perform processing of the measurements to obtain at least one first result, and to forward information to an external apparatus;
wherein the receiving means is further arranged to receive from the external apparatus a second result derived using the information; and
the processing means is arranged to employ the first and second results to assess reliability of each of the sensors in the sensor cluster; characterised in that
the processing means is further arranged to determine an environment-dependent performance degradation of each sensor, and if indicated by the determination, exclude future measurement values of the sensor from the information sent to the external apparatus, wherein the environment-dependent performance degradation is determined by use of an environmental exposure counter associated with each of the respective sensors, each counter configured to characterize the environmental conditions and the environment-dependent performance degradation of the respective sensor.

Preferably, the "processing" referred to above, as in the methods defined earlier, comprises sensor fusion of said measurements on the basis of an expected state of the system indicated by the first and/or second result, the processing means detecting a problem with a sensor on the basis of discrepancy between a said measurement and values of one or more parameters implied by the expected state.

According to a fifth aspect of the present invention, there is provided computer-readable instructions which, when executed by processors of networked computing devices, perform any method as defined above.

Such computer-readable instructions may be stored on one or more non-transitive computer-readable recording media.

### Brief Description of the Drawings

Reference is made, by way of example only, to the accompanying drawings in which:
Figure 1 illustrates a simplified network of sensor clusters connected to a calibrator coordinator for city drainage monitoring;
Figure 2 is a graph of different rates of sensor degradation, including degradation in accuracy and sensitivity, depending on the environmental conditions of their local environment;
Figure 3 shows apparatus in accordance with an embodiment for sensor system calibration and measurement;
Figure 4 shows steps in gathering and assessment of measurements within sensor cluster;
Figure 5 shows steps in performing a sensor fusion assessment of a set of measurements within a sensor cluster;
Figure 6 illustrates the principle of data fusion used in embodiments, showing optional measurements, predictions and forecasts taken from external agencies;
Figure 7 shows data flow in data fusion operations performed at a calibrator coordinator;
Figure 8 shows additional operations performed at a calibrator coordinator for detection of outlier when new measurement is received from a sensor cluster; and
Figure 9 shows steps performed in a calibration mode of a sensor cluster.

### Detailed Description

With the aim of improving management of sensor networks, embodiments of the invention address three types of errors that may arise when using a large number of sensors placed in remote locations which are difficult and/or expensive to access for performing calibration, maintenance and replacement:
(i) Loss of calibration of sensors
(ii) Random errors inherent in sensor measurements, and
(iii) Environment-dependent damage/degradedness of the sensor.

Embodiments provide a network ("sensor network"), made up of a plurality of groups of sensors preferably of different types ("sensor clusters"), where the sensor clusters need not be identical, that is to say each cluster need not necessarily have the same number, or types, of sensor. Also provided is a method to perform calibration on a network-wide basis and to use network-wide information to make measurements. The method may be performed, at least in part, in a centralised node of the network henceforth referred to as a "calibrator coordinator".

It is assumed that over time, each sensor may become decalibrated and give inaccurate measurements. It is further assumed that each type of sensor may be individually calibrated and may give information related to one or more of the other types of sensors. That is, where each sensor type senses a value of a different parameter, these parameters may be correlated, as will be explained later.

In the case of a network for monitoring a city-wide drainage system for example, individual sensors in the sensor cluster may measure flow rates, and toxicity and gas levels.

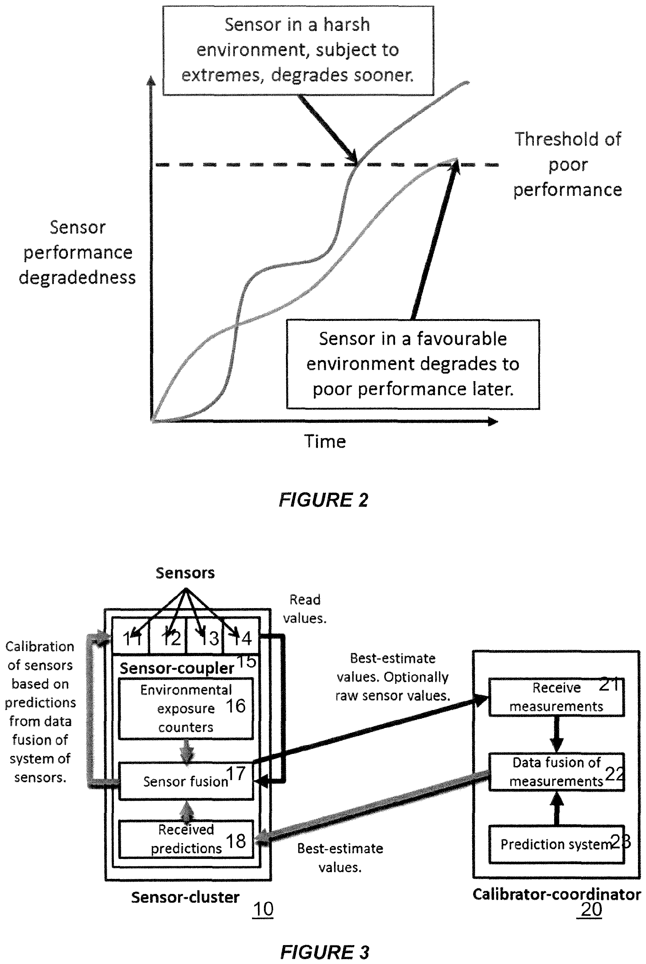

The present invention models each individual sensor as having time-varying and environmentally-influenced (e.g. by temperature, pressure and humidity) response curves to the quantity which they measure. The response curves may change in a number of different ways including to certain known decalibrated responses (e.g. it may be known that a sensor loses accuracy in a predictable way over time for measuring low temperatures). The individual nature of the degradation as a function of life history (and the conditions to which the sensor has been exposed since its deployment) is illustrated in Figure 2.

Figure 2 is a graph showing on a conceptual level how sensors suffer different rates of performance degradation, including degradation in accuracy and sensitivity, depending on the environmental conditions of their local environment. As shown in Figure 2, there is a threshold level of performance degradation beyond which a sensor's performance is no longer acceptable (that is, no longer accurate enough to be useful). A sensor in a harsh environment (exposed above ground to wind or cold for example) reaches this threshold level sooner than another sensor in a more favourable environment (such as sheltered in a housing or underground). To reduce this concept to a practical level, each sensor may be assigned a degradedness count or "score" for example from 0 upwards, with a threshold value of say 100 representing unacceptable performance. It then becomes possible to track a sensor's useful lifespan by maintaining a count for each sensor.

Incidentally, a distinction may be drawn between the local environment of a sensor, by which is meant the immediate surroundings in which the sensor is placed having certain characteristics such as exposure to sunlight or frost, and the "environment" in the wider sense of an environmental system being monitored. Sensors have an environment regardless of whether the sensor network is for measuring environmental parameters. On the other hand the two kinds of "environment" may be related, as for example in the case of a sensor which may be immersed in a drain pipe, since then its local environment is also indicative of the wider environment being monitored.

An ensemble data assimilation and analysis approach is used to identify inaccurate sensors and allow best-measurements to be made even with degraded sensor performance, which reduces the maintenance cost of networks of sensors by increasing efficiency of usage of the available information. This approach uses sensor fusion at both sensor cluster and calibrator coordinator level. The fusion process at the calibrator coordinator will be referred to as "data fusion" to distinguish it from the fusion process ("sensor fusion") at the sensor cluster, but conceptually both are forms of sensor fusion as outlined in the introduction.

Features of embodiments include:
* Assessment and monitoring of internal consistency between different sensors using sensor fusion techniques (different physical parameters are able to provide cross-checks on each other, as known in the art), augmented by predictions from the entire network of sensors combined with a prediction or modelling system.
* Individual life histories of sensors are maintained so that known sensor fusion techniques can be further augmented by knowledge of how a sensor's response changes given exposure to specific conditions.
* Model-based detection of sensor misbehaviour allows recalibration to take place.

The sensor assessment component can be considered to have two levels or stages:
(i) Sensor fusion within each sensor cluster, which may be expected to flag up serious issues early; and
(ii) Data fusion in the calibrator coordinator as a more rigorous assessment of the reliability of the data by the calibrator coordinator using uncertainties obtained from potentially sophisticated models. This is also a form of sensor fusion, but is referred to as "data fusion" to distinguish it from the processing performed at the sensor cluster. Even if the sensor fusion detects problems with certain sensors, leading to measurement values of those sensors being excluded from the information forwarded to the calibrator coordinator, the calibrator coordinator may still be able to detect problems with other sensors owing to its more accurate system model.

These stages will be described in more detail below. First, the overall interaction between the sensor clusters and the calibrator coordinator is illustrated in Figure 3.

One sensor cluster 10 is schematically shown at the left side in Figure 3. It includes a plurality of sensors 11, 12, 13, and 14; and a sensor coupler 15 for monitoring environmental exposure, performing sensor fusion and communicating with the calibrator coordinator 20 (right side of Figure 3). Only one sensor cluster is shown, but in reality there would be many of these distributed around a city or region (as indicated in Figure 1). The sensor cluster 10 is expected to be a more lightweight device (in terms of processing power and energy consumption) than the calibrator coordinator 20.

Each of the sensors 11-14 is arranged to measure the value of one or more environmental parameters at a given time. In the example of a citywide drainage system, the parameters being measured would include the water level at the location of the sensor. Thus, at its simplest the network would measure values of only one parameter. More typically, more than one parameter would be measured so as to permit sensor fusion and/or data fusion on the basis of multiple parameters. For example, in the case of a drainage system, ambient temperature would be another relevant parameter. Further parameters might include the clarity or turbidity of drain water, the presence or absence of certain chemical constituents of the drain water; and so forth. Typically, sensor values would be combined with an identifier of the sensor which measured them, allowing specific sensor data to be traced back to the originating sensor (and sensor cluster).

A preferable, but not essential, arrangement of sensor-clusters is for each sensor cluster to contain one sensor per parameter with all sensor-clusters monitoring the same parameters.

Typically, each sensor would be arranged to provide a reading at predetermined time intervals, such as once per hour or once per minute, so that a set of measurements from the sensors of one sensor cluster (and preferably of all sensor-clusters) would apply to the same time interval or time point. Alternatively, or in addition, some sensors may be arranged to provide measurements on an ad hoc basis, for example if a reading exceeds an "emergency" threshold necessitating an alarm message to the sensor coupler.

The sensor coupler 15 is connected, by wired or wireless means, to each of the sensors 11-14 in the cluster. It has functional units including environmental exposure counters 16, a sensor fusion module 17, and a memory 18 for storing predictions received from the calibrator coordinator 20.

The environmental exposure counters 16 are associated with each of the respective sensors 11-14. Each counter is configured to characterize the environmental conditions and to characterize the environment-dependent performance degradation (Figure 2) of a respective one of the sensors. As already mentioned a count may be maintained representing the accumulated environmental exposure (ageing) of each sensor, starting at zero and counting upwards. More than one counter per sensor may be present. For example, for one particular sensor, there may be a counter to enumerate the number of hours the sensor was exposed to a temperature greater than 40 degrees Celsius, and another counter to enumerate the number of hours the sensor was in contact with water.

Alternatively, for one particular sensor, there may be a counter to measure the accumulation of damage/degradedness (measured in arbitrary units) caused by a combination of high temperature, pressure and humidity with each of these factors having a non-linear effect on the amount of damage/degradedness accumulated. For example, extremes of temperature (frost damage for example) may be assigned a relatively high score compared with routine temperature variations.

It should be noted that the parameters used to characterize the environment-dependent performance degradation be not be the same as environmental parameters used in sensor (or data) fusion. For example, the effect of temperature exposure upon a sensor may be recorded within the sensor-coupler even if temperature is not a relevant environmental parameter of the system being monitored.

Each sensor coupler 15 may operate in calibration mode, measurement mode or decommissioned mode (these modes are explained in more detail below). Each individual sensor 11-14 also operates in one of the aforementioned modes. Typically, a sensor coupler is in calibration mode if at least one attached sensor is in calibration mode.

At least when the sensor coupler 15 is in measurement mode, the sensor fusion module 17 takes the measurements (raw sensor values) from the sensors 11-14 and processes them in some way to obtain a processing result (referred to in the claims as a "first result"). At its simplest, the processing in the module 17 is an averaging or smoothing of the individual measurements of sensors of the same type, to arrive at a single value applicable to the time interval concerned.

Consider for example sensors each monitoring the water level at different points along a drainpipe; owing to eddies or ripples as the water flows along the pipe, the instantaneous level at each sensor may vary around a mean level, but by averaging the readings from multiple sensors, such variations can be smoothed out. Alternatively or in addition, multiple readings within the same time interval from the same sensor may also be averaged. Thus, the averaged/smoothed value becomes the sensor cluster's "best estimate" for the parameter being measured and for that time interval. This averaged value may further be forwarded as information to the calibrator coordinator.

Preferably, however, the processing in the sensor fusion module 17 is more sophisticated than this, and (as implied by the name) will involve some form of sensor fusion of readings from the individual sensors to yield the "first result". As mentioned in the introduction, measured values of multiple parameters may be synthesized to obtain information which is more directly useful for the calibrator coordinator, such as a best-estimate value of another parameter which might not be possible or practical to sense directly.

Another important use of sensor fusion in the sensor cluster is to detect the need for calibration and/or decommissioning of individual sensors as explained below. Therefore, performing sensor fusion within the sensor cluster is advantageous even if the results thereof are not supplied to the calibrator coordinator. This also means that the sensor fusion module may performs two distinct kinds of processing: processing (including possibly data fusion) for internal purposes directed towards detecting sensors in need of calibration, to obtain the above "first result"; and processing (also possibly including sensor fusion) the results of which are information (which may or may not incorporate the "first result") including a "best estimate" intended for consumption by the calibrator coordinator. The former kind of processing would normally involve all sensors, but the latter processing would normally only involve sensor values judged as reliable.
The sensor coupler 15 transmits either a best-estimate value, the raw sensor values, or both to the calibrator coordinator 20 as shown in Fig. 3. The calibrator coordinator 20 forms (in terms of the network architecture and not necessarily its location) a central node for the network 1 and thus is most conveniently a single node; however this does not exclude the possibility of a distributed calibrator coordinator or a plurality of calibrator coordinators with an overall management node to coordinate them.

The calibrator coordinator 20 shown in Figure 3 likewise has functional units including a receiver 21 for receiving and temporarily storing measurements received from the sensor clusters 10, a data fusion module 22, and a prediction system 23.

The receiver 21 communicates with a plurality of sensor clusters 10 via a combination of wireless and wired means. As an example, the calibrator coordinator 20 may be provided by a computer linked to the Internet, each sensor cluster 10 transmitting its measurements initially by wireless to a wireless communication network which then forwards the measurements over the wired IP network to the calibrator coordinator.

The calibrator coordinator 20 accumulates measurements from all the sensor clusters 10 actively involved in environmental monitoring (that is, whose sensor couplers 15 are operating in measurement mode) and calculates estimates for the true values of the one or more parameters at the sensor coupler locations and preferably for each individual sensor. The data fusion module 22 preferably includes simulation code to predict the true values surrounding the locations of the sensor couplers. This can be done using known data fusion techniques as outlined in the introduction: based on a system model and knowing the existing system state, the data fusion module 22 can predict the system state at the next time interval to yield estimates for the values of the parameters at each sensor location. The predictions are then compared with the actual measured values to update the model. The process is repeated for every predetermined time interval in the system, preferably in real-time so that the system being examined can be monitored non-stop.

In the above example of a sensor network monitoring a drainage system, a hydraulic model describing flows in the system would be appropriate. If the sensor network were measuring atmospheric or environmental variables for climate monitoring purposes, the calibrator coordinators may have numerical weather prediction (NWP) functionality (such as that provided by the Weather Research and Forecasting, WRF, modelling system) which predicts the temperature, pressure and wind speed at the locations of the sensor couplers a short period of time into the future (for example, one hour ahead). As shown by the thick arrow in Fig. 3, the calibrator coordinator 20 provides the predicted values to the sensor couplers 15 in calibration mode and optionally, to the sensor couplers 15 in measurement mode.

The sensor couplers in calibration mode use the predicted values to calibrate the respective sensors. The sensor couplers 15 use known sensor fusion techniques and the supplied predicted values to calculate an estimate of the correct measurements. The calibrator coordinator 20 uses known data fusion techniques and a prediction system to calculate, for each sensor cluster, an estimate of the correct measurements using more data than is available to the sensor couplers of the sensor clusters. This estimate may constitute the "second result" mentioned earlier which is fed back to the sensor cluster concerned.

Either the calibrator coordinator 20 or individual sensor couplers 15 are able to place specific sensors or entire sensor clusters into decommissioned mode if, on the basis of the calculated estimates, the measurements taken are insufficiently reliable or accurate for the intended applications. Thus, in addition to the "best estimate values" indicated in Fig. 3, the calibrator coordinator may provide instructions to each sensor cluster for example for decommissioning purposes.

In both cases, the various functional modules may be implemented using a microprocessor, digital signal processor (DSP), application-specific integrated circuit (ASIC), field-programmable gate array (FPGA), or other logic circuitry programmed or otherwise configured to perform the various functions to be described.

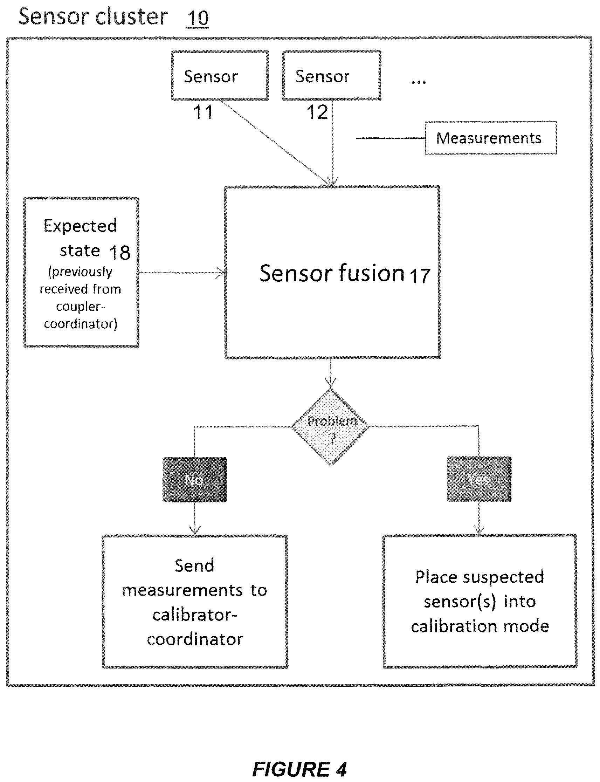

The operation of the assessment procedure within the sensor cluster is illustrated in Figure 4. As shown, the sensors supply their raw sensor values at each predetermined time interval of operation in the network, to the sensor fusion module 17 of the sensor coupler 15, which applies logic to detect problems with the measurements given by the sensors. More particularly the expected state of the system from the previous time interval, supplied from the calibrator coordinator as indicated in Figure 3, is used to predict values (or ranges of values) which might be expected to apply in the current time interval. As indicated in the Figure, if the raw sensor value conforms with that predicted - "No" in Figure 4 - (in other words is within the predicted range, or differs within a given tolerance from the predicted value), the sensor value is assessed as reliable. The sensor value is then passed on to the calibrator coordinator, either directly as a raw sensor value, and/or as the result of processing. On the other hand - "Yes" in Figure 4 - the sensor fusion module determines that a problem exists with respect to a given sensor if its raw sensor value differs greatly from that predicted - in other words that specific sensor is assessed as unreliable. That is, it is assumed to be likely that a raw sensor value differing greatly from the prediction is the result of a fault in the sensor, rather than a true reading. In this case the sensor concerned is placed into the calibration mode. In this instance the raw sensor value would not normally be passed on to the calibrator coordinator, or employed in any processing (such as averaging/smoothing or data fusion) for consumption by the calibrator coordinator.

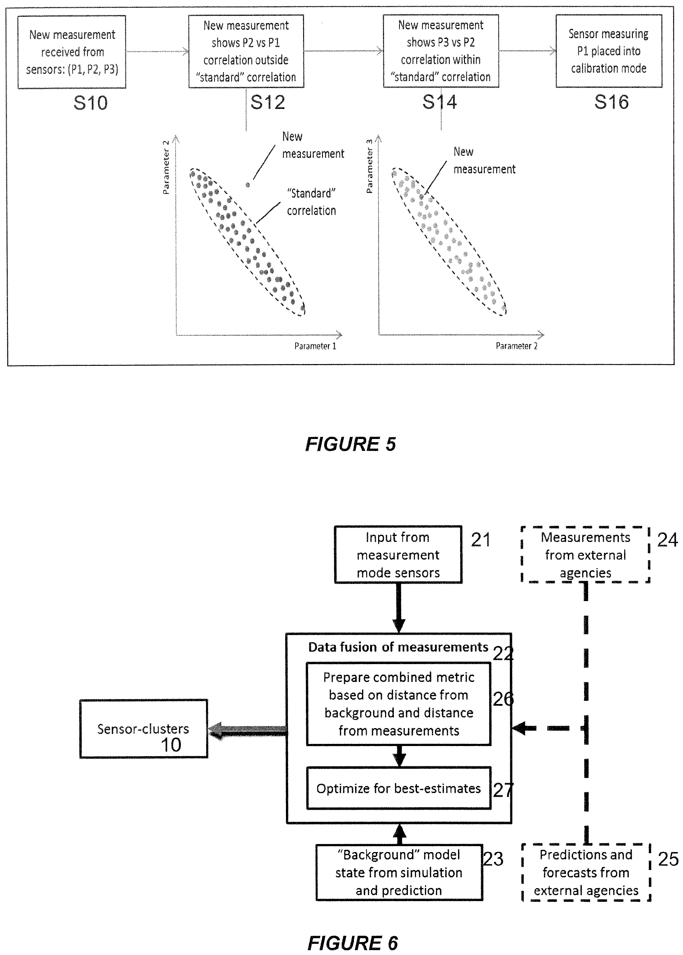

Figure 5 illustrates this process in an example using the correlations between three parameters labelled P1, P2 and P3.

First, in step S10 the sensor coupler receives measurements of values of parameters P1,P2 and P3 from sensors in the sensor cluster. Next, in step S12 the sensor fusion module 17 compares the raw sensor values and determines that one of the sensors has provided a measurement for P2 which lies outside a standard correlation of P2 with P1 which the sensor fusion module has stored internally (see graph under S12). However, in step S14 the sensor fusion module 17 finds the same sensor value to lie within its expected correlation of P3 with P2 (see graph under S14). The sensor fusion module concludes from this that the sensor which provided P2 requires calibration. In step S16 the sensor concerned is placed in calibration mode.

The sensors themselves are expected to be relatively simple, so it is expected that the computational overhead incurred by this step should be modest.

As a further input to the above process (either considered separately or incorporated into the sensor fusion) the values from the environmental exposure counters 16 are used. For example, if the counter value for a given sensor exceeds the threshold value then its subsequent sensor values are excluded from the best estimate determination regardless of any assessment of reliability; or a reduced weighting is applied to values from such a sensor for sensor fusion purposes once a first threshold is exceeded; and exceeding a second, higher threshold may prompt immediate decommissioning.

However, a sensor is not decommissioned (taken out of use) merely due to exceeding a design lifetime, so long as its environmental exposure value has not reached the required threshold.

The components of the calibrator coordinator are illustrated in Figure 6. In addition to the components already shown in Figure 3, Figure 6 shows how the calibrator coordinator 20 receives optional measurements 24 and/or predictions and forecasts 25 taken from external agencies, in addition to the input 21 (such as raw sensor values or a first processing result) from sensors in measurement mode as already mentioned. The data fusion module 22 of the calibrator coordinator is here shown as having two sub-modules 26 and 27, in which module 26 prepares a combined metric based on the distance from background and distance from measurements and module 27 optimizes the results from module 26 to provide the best-estimates referred to earlier for feeding back to the sensor-clusters (as indicated by the thick arrow). As already mentioned with respect to Figure 3, the data fusion is informed by the prediction system 23 which provides a background model state on the basis of simulation and prediction.

Thus, errors and metrics are prepared in the data fusion module 22 and known methods of optimization are used to produce best-estimates of the true values of the quantities measured by the sensor clusters. In numerical weather prediction, the data fusion step is "data assimilation" and the best-estimates are collectively known as the "analysis".

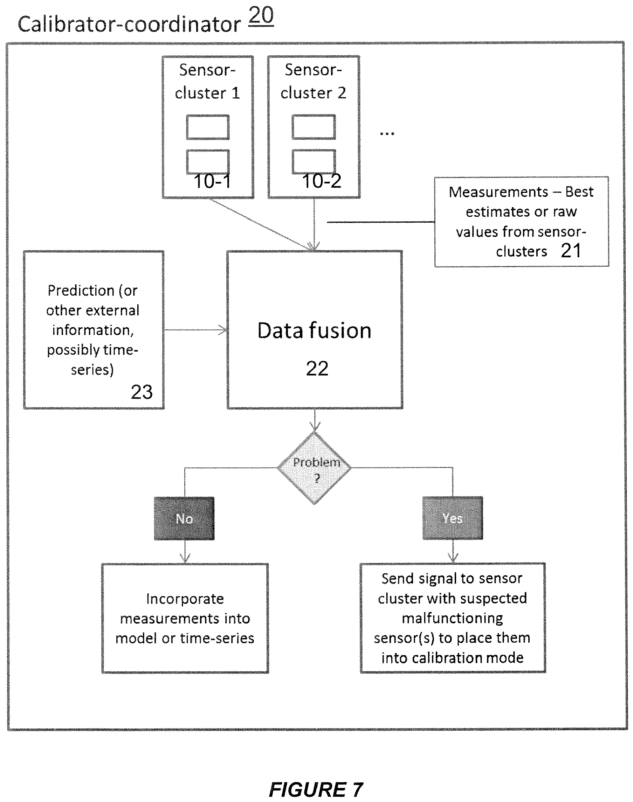

Operation of the calibrator coordinator is further illustrated in Figure 7, with particular reference to data flow during data fusion. Sensor clusters 10-1 and 10-2 are illustrated as providing measurements (raw sensor values and/or processed results) to the data fusion module 22. These are assessed using data fusion techniques together with external information, which may come from a model or time-series of data measured earlier.

As measurements are received from the sensor clusters in the network, and compared with predictions and/or other information (indicated at 23 in the Figure) the data fusion module 22 decides whether there are problems with any of the measurements received. As in Figure 4, "Problem?" implies a check of whether a received measurement lies within the expected range, such as within the standard correlation of the kind shown in Figure 5. If the result of the check is "No" (i.e., no problem), the data from the sensors which are deemed to be working correctly are combined with the existing data to provide a set of best estimates. On the other hand, if the result is "Yes" (i.e., there is a problem, a signal or instruction is transmitted to the sensor cluster concerned to cause the sensor(s) affected to be placed into calibration mode. Depending on the amount of information available to the calibrator coordinator, the signal or instruction may identify the specific sensor requiring attention, or may simply flag a problem with the sensor cluster as a whole, which the sensor coupler has to investigate.

The data fusion module 22 thus receives measurements such as temperature, flow rate and gas levels from the sensors in measurement mode. The degradedness level of each specific sensor may also be received. The prediction system 23 supplies the expected values in a wide geographical area containing all the sensors and in particular an expected value for each parameter at each sensor cluster location, together with an uncertainty estimate. In the case of a weather prediction, the uncertainty estimates could be derived from the range of values produced by an ensemble simulation. For other types of models, estimation of the uncertainties could be performed in a similar fashion by applying perturbations to the model inputs and assessing the corresponding sensitivity of the model predictions (the magnitude of the applied perturbations would take into account in particular the degradedness level of each sensor cluster); if an appropriate method for estimating uncertainties specific to the prediction model in use is available that could be used instead.

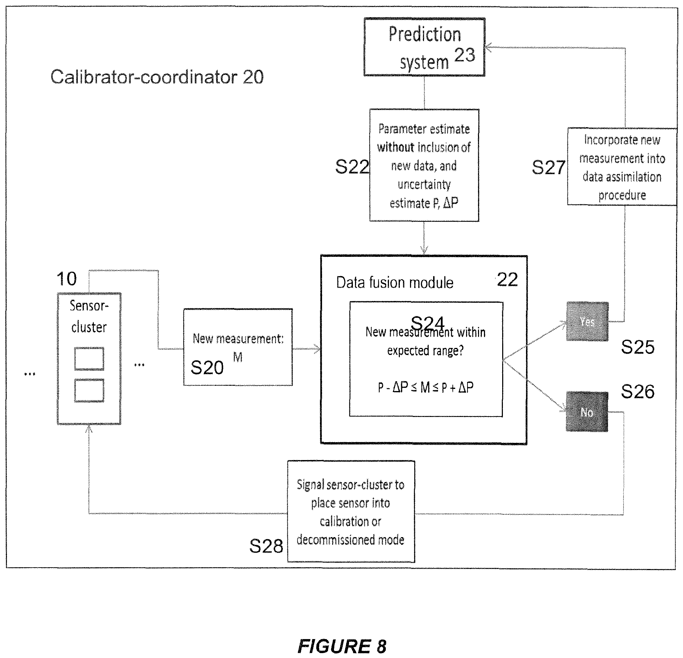

In one embodiment, the predicted values can be sent directly to the sensor cluster. In a second embodiment, a data assimilation (DA) phase occurs which combines the predictions with the incoming data from the sensors to arrive at a better estimate. Before using the received measurement in the DA step, a procedure for identifying whether the measurement lies outside of an expected range can be performed. An algorithm for determining whether a received measurement is an outlier is shown in Figure 8.

Figure 8 represents steps performed within the calibrator coordinator 20. In a step S20, when a new measurement is received from a sensor cluster 10, the model used in the prediction system 23 provides a prediction, together with an associated uncertainty, that is provided in step S22 to the data fusion module and used in step S24 to define a range within which the new measurement is expected to lie. In S25, if the new measurement is within the expected range ("Yes"), the new measurement is deemed not to be an outlier, and is used in the data assimilation (S27) to update the model. In the case of an ensemble weather prediction model, the data assimilation (DA) procedure updates each of the members and provides a new best estimate (i.e. average value of the parameter of interest over the members), together with the uncertainty (the spread of the parameter values across the members after the DA update procedure). The strategy suggested in Figure 8 is rather simple, however, the procedure used to obtain the uncertainties in the predictions may be as sophisticated as required. On the other hand if the new measurement is not within the expected range (S26, "No"), the measurement is not used to update the model, and the calibrator coordinator may instruct the sensor coupler in step S28 to enter calibration or decommissioned modes.

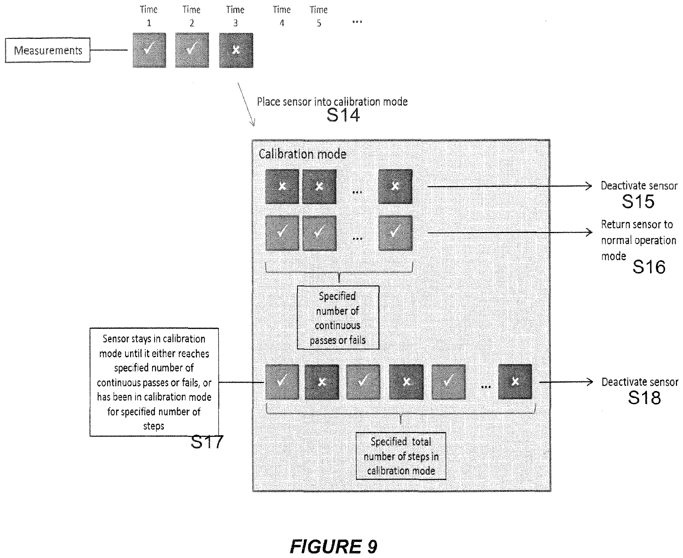

Some further explanation will now be made of the calibration mode in the sensor clusters, with reference to Figure 9.

When either the sensor fusion (within a sensor cluster), or data fusion (in the calibrator coordinator) processes have detected a possible problem with a sensor, that sensor will be placed in calibration mode. A possible set of steps that will take place during the calibration phase are illustrated in Figure 9.

In Figure 9, the ticks indicate measurements determined to be valid or "successes", whilst crosses denote measurements deemed to be unreliable or faulty ("failures"). In step S14, once a possible problem has been identified with a particular sensor, the sensor is placed in calibration mode. The sensor cluster 10 continues to collect measurements from the affected sensor. The strategy for deciding when the sensor may leave calibration mode in this example is to check for a continuous number of successes or failures. In the case of a series of successive fails (S15) the sensor is deactivated (decommissioned). In the event of a series of a predetermined number of successes, the sensor is determined to be working normally again and it is returned to the measurement mode (S16). If continuous sets of passes or failures are not received (i.e. an alternating set of successes and failures is registered - step S17), the sensor can remain in calibration mode for a maximum number of steps, before being deactivated (S18).

Once a sensor is in calibration mode, it no longer contributes to the data fusion process. That is, its sensor data is no longer supplied to the calibrator coordinator or used when generating the information supplied to the calibrator coordinator. The sensor coupler will try to calibrate the sensor to give more accurate readings. To the extent possible, this will be done automatically without requiring intervention. For example, suppose that a sensor is detected as, or suspected of, deteriorating due to excessive cold or dampness, then the sensor coupler may activate a heater in view of that sensor to warm it up and/or dry it out. On other occasions, human intervention may be necessary, in which case the sensor-coupler may be equipped to transmit a request for assistance to the wireless communication network.

If the calibration process does not result in improved measurements, as judged by comparison to predicted values based on the best available information, the sensor will be placed in decommissioned mode and marked as a candidate for manual calibration or replacement. For example, the sensor cluster may transmit a request for a replacement sensor whenever a sensor in that cluster is decommissioned.

This invention has a wide range of applications as demonstrated by the many types of sensors to which it is applicable.

| **Type of sensor** | **Comment** |
|---|---|
| Thermometer | Measures temperature. |
| Hygrometer | Measures moisture content of air. |
| Rain gauge | Measures liquid precipitation. |
| Barometer | Measures atmospheric pressure. |
| Sound meter | Measures sound pressure level. |
| Altimeter | Measures altitude. |
| Bottom pressure sensor | Measures pressure at sea or ocean floor. |
| Tide gauge | Measures sea level above a reference. |
| Fathometer | Measures depth of water. |
| Seismometer | Measures motions of the ground. |
| Accelerometer | Measures linear acceleration. |
| Gyroscope | Measures orientation. |
| Compass | Locates magnetic north. |
| Magnetometer | Measures strength and possibly direction of magnetic fields |
| Gyrocompass | Locates true north. |
| Velocitymeter | Measures fluid velocity. |
| Photomultiplier | Detects photons. |
| Scintillation counter | Measures ionizing radiation. |
| Image sensor | Measures light of various wavelengths. |
| Antenna | Measures electromagnetic waves. |
| Hydrometer | Measures specific gravity of liquids. |
| Viscometer | Measures viscosity of fluids. |
| Gravimeter | Measures strength of gravitational field. |
| Chronometer | Measures proper time. |
| Ammeter | Measures electric current. |
| Composite sensors | e.g. GPS receivers, humidity sensors |

Here, "composite sensors" denote sensors incorporating more than one kind of sensor in the same package. It should be noted that any of the above sensors may be augmented with additional sensors/detectors for the purpose of the environmental exposure counters 16. For example, a sensor may be equipped with a temperature detector for registering heat or frost damage even if temperature is not a parameter being formally monitored by the sensor system.

To summarise, embodiments of the present invention provide an environmental sensor network 1 comprises a plurality of sensor clusters 10, each sensor cluster having a plurality of sensors 11-14 and a sensor coupler 15, and a calibrator coordinator 20 in communication with the sensor clusters 10. The sensor coupler 15 of each sensor cluster obtains measurements of values of one or more environmental parameters from the sensors 11-14 of its own cluster, performs first processing on the measurements to obtain at least one first result, and forwards information extracted or generated from the measurements (possibly including the first result) to the calibrator coordinator 20. The calibrator coordinator performs second processing on the information received from all of the sensor clusters 10 to obtain at least one second result, and feeds back the second result to the sensor clusters 10 which then employ the first and second results to assess the sensors in terms of their reliability and accuracy. More particularly the first and second results indicate expected values of the environmental parameters, and each sensor coupler decides whether, and how, to incorporate the measurements of sensors into the first processing in dependence on the degree of conformity of the measurements with the expected values. The sensor coupler may calibrate or decommission or replace sensors determined to be unreliable on the basis of the expected values.

Embodiments of the present invention increase the amount of information that can be derived from a network of sensors when they are performing normally or when they exhibit degraded performance due to exposure to their environment and aging effects.

The maintenance cost of the sensor network is decreased because reliable information can be collected beyond the average lifetime of individual sensors, and remote calibration of sensors reduces the labour cost of individual calibration. Degraded sensors can be prioritized for manual recalibration, if necessary, and prioritized for decommissioning or replacement so that these operations are carried out in a timely manner but only as needed. This saves cost compared to regularly scheduled recalibration and replacement without full regard to the accuracy and degradedness of performance. The cost of deploying the invention is expected to be recouped in the savings made from avoiding the higher maintenance costs of proceeding without the invention.

Various modifications are possible within the scope of the invention.

The information forwarded from each sensor cluster to the calibrator coordinator may include the results of processing in the sensor-clusters (such as each "first result" referred to above), or may simply consist of the raw sensor data of at least those sensors determined to be reliable.

In the embodiment described above, sensor data of sensors assessed as being unreliable in the sensor cluster were excluded from the information forwarded to the calibrator coordinator. In an alternative embodiment, readings of all sensors are sent to the calibrator coordinator, allowing the calibrator coordinator to check the determinations made in each sensor cluster. As already mentioned the sensor data would be labelled with an identifier of the originating sensor (and sensor cluster) to allow the calibrator coordinator to distinguish them. Preferably, in this case, raw sensor values judged as unreliable in the sensor cluster should also be labelled as such, to avoid the risk of them being incorporated into the calibrator coordinator data fusion.

In the described embodiment above, each sensor cluster includes the environmental exposure counters 16 and determines for itself the environment-dependent performance degradation of each sensor. However, this is not essential and if preferred, each sensor cluster could transmit to the calibrator coordinator the additional data needed to maintain these counters in the calibrator coordinator. The calibrator coordinator would then feed back a determination that a given sensor had exceeded its lifetime on the basis of the environmental exposure. Alternatively, this feature (which is an add-on to the assessment of sensor reliability by sensor/data fusion) may be dispensed with entirely.

It is implicit in the above described embodiment that a sensor coupler acts on an instruction or recommendation from the calibrator coordinator, to calibrate or decommission a specific sensor found to be unreliable. However, to deal with random (non-repeating) errors, the sensor coupler may wait for a repetition of the problem before taking action with respect to the sensor.

### Industrial Applicability

In addition to the example of the management of drainage systems by city authorities described earlier, the invention may be deployed in mobile phone base stations (especially for placement in less developed countries) which are measuring meteorological variables for local usage or input to other weather and climate forecast systems. Other types of monitoring within a city include traffic levels, and pollution of the atmosphere and waterways.

The invention may be deployed together with sensors used in earthquake and tsunami early warning systems.

Other relevant technological fields include monitoring of machinery involved in engineering including the monitoring of aircraft engines and fuselage.

## Claims

1. A method of managing a sensor network comprising:
providing a plurality of sensor clusters (10), each sensor cluster having a plurality of sensors (11, 12,..), and a calibrator coordinator (20) in communication with the sensor clusters (10.);
at each sensor cluster (10), obtaining by a sensor coupler (15) measurements of values of one or more parameters from the sensors, performing first processing on the measurements to obtain at least one first result, and forwarding information to the calibrator coordinator (20);
at the calibrator coordinator (20), performing second processing on the information received from the sensor clusters (10) to obtain at least one second result, and feeding back the second result to the sensor clusters (10); and
at each sensor cluster (10), assessing by a sensor coupler (15) reliability of the sensors (11, 12,..) by employing the first and second results;
**characterised by**, at each sensor cluster, determining by a sensor coupler (15) an environment-dependent performance degradation of each sensor, and if indicated by the determination, excluding future measurement values of the sensor from the information sent to the calibrator coordinator, wherein the environment-dependent performance degradation is determined by use of an environmental exposure counter (16) associated with each of the respective sensors (11, 12,..), each counter configured to characterize the environmental conditions and the environment-dependent performance degradation of the respective sensor.

2. The method according to claim 1 wherein the environmental exposure counter (16) measures the accumulation of degradedness to the respective sensor (11, 12,..) caused by high temperature, pressure and humidity with each of these factors having a non-linear effect on the amount of degradedness accumulated.

3. The method according to claim 1 or 2 wherein the information forwarded to the calibrator coordinator (20) includes at least one of:
the measurements from each of the sensors among said plurality of sensors assessed as reliable; and
a best estimate value of the one or more parameters.

4. The method according to claim 1, 2 or 3 wherein the second result comprises at least one of:
best estimate values of the one or more parameters at the locations of the sensors (11, 12,..) in the sensor cluster (10); and
an instruction to calibrate or decommission at least one of the sensors.

5. The method according to claim 1, 2, 3 or 4 wherein the first processing and/or the second processing comprises sensor fusion of measurements from the sensors (11, 12,..), using predicted values to determine whether the measurements have values within an expected range.

6. The method according to any preceding claim further comprising, at each sensor cluster (10), placing a sensor (11, 12,..) in a calibration mode in dependence on said assessing, in which mode the sensor continues to make measurements but such measurements are excluded from the information sent to the calibrator coordinator.

7. The method according to claim 6 further comprising, at each sensor cluster (10), finding the effect of calibration upon measurements from the sensor (11, 12,..) by employing the first and/or second results, and in dependence on the effect found:
leaving the sensor in calibration mode; or
placing the sensor in a measurement mode in which its measurements are included in the information sent to the calibrator coordinator; or
placing the sensor in a decommissioned mode in which no further measurements are obtained from the sensor.

8. The method according to claim 7 wherein finding the effect of calibration includes comparing the measurements with values expected based on the first and/or second result, the sensor (11, 12,..) being placed in the measurement mode when a predetermined number of successive measurements match the values expected.

9. The method according to any preceding claim wherein the second processing comprises data fusion employing the information from the sensor clusters (10) to update a model of the system of which the one or more parameters are characteristics, the second result including an estimate of values of the one or more parameters for each sensor (11, 12,..).

10. A sensor network comprising:
a plurality of sensor clusters (10), each sensor cluster having a plurality of sensors (11, 12,..) and a sensor coupler (15), and
a calibrator coordinator (20) in communication with the sensor clusters (10); wherein
the sensor coupler (15) of each sensor cluster (10) is arranged to obtain measurements of values of one or more parameters from the sensors (11, 12,..), to perform first processing on the measurements to obtain at least one first result, and to forward information to the calibrator coordinator; and
the calibrator coordinator (20) is arranged to perform second processing on the information received from the sensor clusters (10) to obtain at least one second result, and to feed back the second result to the sensor clusters;
wherein in each sensor cluster (10), the sensor coupler is arranged to employ the first and second results to assess reliability of the sensors (11, 12,..);
**characterised by** an environmental exposure counter (16) associated with each of the respective sensors (11, 12,..), each counter configured to characterize the environmental conditions and the environment-dependent performance degradation of the respective sensor, wherein the sensor coupler (15) is further arranged to use the output of the environmental exposure counter (16) to determine an environment-dependent performance degradation of each sensor, and if indicated by the determination, exclude future measurement values of the sensor from the information forwarded to the calibrator coordinator.

11. An apparatus for use as a sensor coupler (15) in a sensor system and comprising:
receiving means connected to a plurality of sensors (11, 12,..) forming a cluster (10), and arranged to obtain measurements of values of one or more parameters from the sensors; and
processing means arranged to perform processing of the measurements to obtain at least one first result, and to forward information to an external apparatus (20); and
wherein the receiving means is further arranged to receive from the external apparatus (20) a second result derived using the information; and
the processing means is arranged to employ the first and second results to assess reliability of the sensors (11, 12,..); **characterised in that**
the processing means is further arranged to determine an environment-dependent performance degradation of each sensor, and if indicated by the determination, exclude future measurement values of the sensor from the information sent to the external apparatus (20), wherein the environment-dependent performance degradation is determined by use of an environmental exposure counter (16) associated with each of the respective sensors (11, 12,..), each counter configured to characterize the environmental conditions and the environment-dependent performance degradation of the respective sensor.

12. The apparatus according to claim 11 wherein said processing comprises sensor fusion of said measurements on the basis of an expected state of the system indicated by the first and/or second result, the processing means detecting a problem with a sensor (11, 12,..) on the basis of discrepancy between a said measurement and values of one or more parameters implied by the expected state.

13. Computer-readable instructions which, when executed by processors of networked computing devices, perform the method according to any of claims 1 to 9.

## Patentansprüche

1. Verfahren zum Verwalten eines Sensornetzwerks, umfassend:
Bereitstellung mehrerer Sensorcluster (10), wobei jeder Sensorcluster mehrere Sensoren (11, 12,..) aufweist, und eines Kalibrierungskoordinators (20) in Kommunikation mit den Sensorclustern (10);
an jedem Sensorcluster (10), Beschaffung von Messungen von Werten von einem oder mehreren Parametern von den Sensoren durch einen Sensorkoppler (15), Durchführung der ersten Verarbeitung der Messungen, um mindestens ein erstes Ergebnis zu erhalten, und Weiterleitung der Informationen an den Kalibrierungskoordinator (20);
am Kalibrierungskoordinator (20), Durchführen der zweiten Verarbeitung der Informationen, die von den Sensorclustern (10) empfangen wurden, um mindestens ein zweites Ergebnis zu erhalten, und Zurückspeisen des zweiten Ergebnisses an die Sensorcluster (10); und
an jedem Sensorcluster (10), Bewertung der Zuverlässigkeit der Sensoren (11, 12,...) durch einen Sensorkoppler (15) durch Einsatz der ersten und zweiten Ergebnisse;
**gekennzeichnet durch** Bestimmung einer umgebungsabhängigen Leistungsverringerung jedes Sensors an jedem Sensorcluster durch einen Sensorkoppler (15) und, wenn dies durch die Bestimmung angezeigt wird, Ausschluss künftiger Messwerte des Sensors von den Informationen, die an den Kalibrierungskoordinator gesendet werden, wobei die umweltabhängige Leistungsverringerung durch Verwendung eines Umweltkontaktzählers (16) bestimmt wird, der mit jedem der jeweiligen Sensoren (11, 12,...) assoziiert ist, wobei jeder Zähler konfiguriert ist, die Umweltbedingungen und die umweltabhängige Leistungsverringerung des jeweiligen Sensors zu charakterisieren.

2. Verfahren nach Anspruch 1, wobei der Umweltkontaktzähler (16) die Ansammlung der Verringerung an dem jeweiligen Sensor (11, 12,..) misst, die durch hohe Temperatur, Druck und Feuchtigkeit erzeugt wird, wobei jeder dieser Faktoren eine nichtlineare Wirkung auf die Menge der angesammelte Verringerung aufweist.

3. Verfahren nach Anspruch 1 oder 2, wobei die Informationen, die an den Kalibrierungskoordinator (20) weitergeleitet werden, mindestens eines der folgenden umfassen:
die Messungen von jedem der Sensoren unter den mehreren Sensoren, die als zuverlässig bewertet werden; und
einen besten Schätzwert der einen oder mehreren Parameter.

4. Verfahren nach Anspruch 1, 2 oder 3, wobei das zweite Ergebnis mindestens eines der folgenden umfasst:
beste Schätzwerte des einen oder der mehreren Parameter an den Orten der Sensoren (11, 12,...) in dem Sensorcluster (10); und
eine Anweisung zur Kalibrierung oder Außerbetriebnahme von mindestens einem der Sensoren.

5. Verfahren nach Anspruch 1, 2, 3 oder 4, wobei die erste Verarbeitung und/oder die zweite Verarbeitung die Sensorfusion der Messungen von den Sensoren (11, 12,..) umfasst, unter Verwendung vorhergesagter Werte zur Bestimmung, ob die Messungen Werte innerhalb eines erwarteten Bereichs aufweisen.

6. Verfahren nach einem der vorhergehenden Ansprüche, ferner umfassend das Versetzen eines Sensors (11, 12,..) an jedem Sensorcluster (10) in einen Kalibrierungsmodus, abhängig von der Bewertung, wobei in diesem Modus der Sensor weitere Messungen ausführt, aber diese Messungen aus den Informationen ausgeschlossen werden, die an den Kalibrierungskoordinator gesendet werden.

7. Verfahren nach Anspruch 6, ferner umfassend die Suche nach der Wirkung der Kalibrierung auf die Messungen des Sensors (11, 12,..) an jedem Sensorcluster (10) durch Einsatz der ersten und/oder zweiten Ergebnisse, und in Abhängigkeit der festgestellten Wirkung:
Lassen des Sensors im Kalibrierungsmodus; oder
Versetzen des Sensors in einem Messmodus, in dem seine Messungen in den Informationen enthalten sind, die an den Kalibrierungskoordinator gesendet werden; oder
Versetzen des Sensors in einem Außerbetriebnahmemodus, in dem keine weiteren Messungen von dem Sensor beschafft werden.

8. Verfahren nach Anspruch 7, wobei die Feststellung der Wirkung der Kalibrierung den Vergleich der Messungen mit Werten umfasst, die auf Grundlage des ersten und/oder zweiten Ergebnisses erwartet werden, dass der Sensor (11, 12,) in den Messmodus geschaltet wird, wenn eine vorgegebene Anzahl aufeinander folgende Messungen zu den erwarteten Werten passen.

9. Verfahren nach einem der vorhergehenden Ansprüche, wobei die zweite Verarbeitung eine Datenfusion unter Einsatz der Informationen von den Sensorclustern (10) umfasst, um ein Modell des Systems zu aktualisieren, für das ein oder mehrere Parameter Charakteristika sind, wobei das zweite Ergebnis eine Schätzung von Werten eines oder mehrerer Parameter für jeden Sensor (11, 12,..) umfasst.

10. Sensornetzwerk, umfassend:
mehrere Sensorcluster (10), wobei jeder Sensorcluster mehrere Sensoren (11, 12,.) und einen Sensorkoppler (15) aufweist, und
einen Kalibrierungskoordinator (20) in Kommunikation mit den Sensorclustern (10); wobei
der Sensorkoppler (15) jedes Sensorclusters (10) angeordnet ist, Messungen von Werten einer oder mehrerer Parameter von den Sensoren (11, 12,..) zu erhalten, eine erste Verarbeitung der Messungen auszuführen, um mindestens ein erstes Ergebnis zu erhalten, und Informationen an den Kalibrierungskoordinator weiterzuleiten; und
der Kalibrierungskoordinator (20) angeordnet ist, eine zweite Verarbeitung der Informationen durchzuführen, die von den Sensorclustern (10) empfangen wurden, um mindestens ein zweites Ergebnis zu erhalten und das zweite Ergebnis an die Sensorcluster zurückzuspeisen;
wobei der Sensorkoppler in jedem Sensorcluster (10) angeordnet ist, die ersten und zweiten Ergebnisse einzusetzen, um die Zuverlässigkeit der Sensoren (11, 12,..) zu beurteilen;
**gekennzeichnet durch** einen Umweltkontaktzähler (16), der mit jedem der jeweiligen Sensoren (11, 12,..) assoziiert ist, wobei jeder Zähler konfiguriert ist, um die Umweltbedingungen und die umweltabhängige Leistungsverringerung des jeweiligen Sensors zu charakterisieren, wobei der Sensorkoppler (15) ferner angeordnet ist, die Ausgabe des Umweltkontaktzählers (16) zu verwenden, um eine umweltabhängige Leistungsverringerung jedes Sensors zu bestimmen, und, wenn durch die Bestimmung angegeben, künftige Messwerte des Sensors aus den Informationen auszuschließen, die an den Kalibrierungskoordinator weitergeleitet werden.

11. Vorrichtung zur Verwendung als Sensorkoppler (15) in einem Sensorsystem und umfassend:
Empfangsmittel, die mit mehreren Sensoren (11, 12,..) verbunden sind, die einen Sensorcluster (10) bilden, und angeordnet sind, um Messungen von Werten einer oder mehrerer Parameter von den Sensoren zu erhalten; und
Verarbeitungsmittel, die zur Durchführung der Verarbeitung der Messungen angeordnet sind, um mindestens ein erstes Ergebnis zu erhalten, und Informationen an eine externe Vorrichtung (20) weiterzuleiten; und
wobei das Empfangsmittel ferner angeordnet ist, von der externen Vorrichtung (20) ein zweites Ergebnis zu empfangen, das unter Verwendung der Informationen abgerufen wurde; und das Verarbeitungsmittel angeordnet ist, die ersten und zweiten Ergebnisse einzusetzen, um die Zuverlässigkeit der Sensoren (11, 12,..) zu bewerten; **dadurch gekennzeichnet, dass**
das Verarbeitungsmittel ferner angeordnet ist, eine umweltabhängige Leistungsverringerung jedes Sensors zu bestimmen, und bei Angabe durch die Bestimmung weitere Messwerte des Sensors aus den Informationen auszuschließen, die an die externe Vorrichtung (20) gesendet werden, wobei die umweltabhängige Leistungsverringerung durch Verwendung eines Umweltkontaktzählers (16) bestimmt wird, die mit jedem der jeweiligen Sensoren (11, 12,..) assoziiert ist, und jeder Zähler konfiguriert ist, die Umweltbedingungen und die umweltabhängige Leistungsverringerung des jeweiligen Sensors zu charakterisieren.

12. Vorrichtung nach Anspruch 11, wobei die Verarbeitung eine Sensorfusion der Messungen auf Grundlage eines erwarteten Zustands des Systems umfasst, der durch das erste und/oder zweite Ergebnis angegeben wird, wobei das Verarbeitungsmittel ein Problem mit einem Sensor (11,12,. ) auf der Grundlage der Diskrepanz zwischen einer der Messungen und den Werten eines oder mehrerer Parameter, die durch den erwarteten Zustand impliziert sind, erkennt.

13. Computerlesbare Anweisungen, die bei Ausführung durch Prozessoren vernetzter Rechnervorrichtungen das Verfahren nach einem der Ansprüche 1 bis 9 ausführen.

## Revendications

1. Procédé de gestion d'un réseau de capteurs comprenant les étapes ci-dessous consistant à :
fournir une pluralité de groupes de capteurs (10), chaque groupe de capteurs présentant une pluralité de capteurs (11, 12, ...), et un coordinateur de calibrateur (20) en communication avec les groupes de capteurs (10) ;
au niveau de chaque groupe de capteurs (10), obtenir, par le biais d'un coupleur de capteurs (15), des mesures de valeurs d'un ou plusieurs paramètres en provenance des capteurs, mettre en oeuvre un premier traitement sur les mesures en vue d'obtenir au moins un premier résultat, et acheminer des informations au coordinateur de calibrateur (20) ;
au niveau du coordinateur de calibrateur (20), mettre en oeuvre un second traitement sur les informations reçues en provenance des groupes de capteurs (10), en vue d'obtenir au moins un second résultat, et réintroduire le second résultat dans les groupes de capteurs (10) ; et
au niveau de chaque groupe de capteurs (10), évaluer, par le biais d'un coupleur de capteurs (15), une fiabilité des capteurs (11, 12, ...), en utilisant les premier et second résultats ;
**caractérisé par** les étapes consistant à, au niveau de chaque groupe de capteurs, déterminer, par le biais d'un coupleur de capteurs (15), une dégradation de performances dépendante de l'environnement de chaque capteur, et si cela est indiqué par la détermination, exclure des valeurs de mesures futures du capteur des informations envoyées au coordinateur de calibrateur, dans lequel la dégradation de performances dépendante de l'environnement est déterminée en utilisant un compteur d'exposition environnementale (16) associé à chacun des capteurs respectifs (11, 12, ...), chaque compteur étant configuré de manière à caractériser les conditions environnementales et la dégradation de performances dépendante de l'environnement du capteur respectif.

2. Procédé selon la revendication 1, dans lequel le compteur d'exposition environnementale (16) mesure l'accumulation de dégradation sur le capteur respectif (11, 12, ...) occasionnée par une température, une pression et une humidité élevées, chacun de ces facteurs présentant un effet non linéaire sur la quantité de dégradation accumulée.

3. Procédé selon la revendication 1 ou 2, dans lequel les informations acheminées vers le coordinateur de calibrateur (20) incluent au moins l'un des éléments parmi :
les mesures provenant de chacun des capteurs parmi ladite pluralité de capteurs évalués comme fiables ; et
une valeur de meilleure estimation dudit un ou desdits plusieurs paramètres.

4. Procédé selon la revendication 1, 2 ou 3, dans lequel le second résultat comprend au moins l'un des éléments parmi :
des valeurs de meilleure estimation dudit un ou desdits plusieurs paramètres aux emplacements des capteurs (11, 12, ...) dans le groupe de capteurs (10) ; et
une instruction pour étalonner ou mettre hors service au moins l'un des capteurs.

5. Procédé selon la revendication 1, 2, 3 ou 4, dans lequel le premier traitement et/ou le second traitement comprennent une fusion de capteurs de mesures provenant des capteurs (11, 12, ...), en utilisant des valeurs prédites pour déterminer si les mesures présentent des valeurs dans une plage attendue.

6. Procédé selon l'une quelconque des revendications précédentes comprenant en outre, au niveau de chaque groupe de capteurs (10), l'étape consistant à placer un capteur (11, 12, ...) dans un mode d'étalonnage en fonction de ladite évaluation, dans lequel mode le capteur continue à effectuer des mesures, mais ces mesures sont exclues des informations envoyées au coordinateur de calibrateur.

7. Procédé selon la revendication 6, comprenant en outre, au niveau de chaque groupe de capteurs (10), l'étape consistant à rechercher l'effet d'étalonnage sur des mesures provenant du capteur (11, 12, ...), en utilisant le premier résultat et/ou le second résultat, et en fonction de l'effet trouvé, les étapes ci-dessous consistant à :
laisser le capteur en mode d'étalonnage ; ou
placer le capteur dans un mode de mesure dans lequel ses mesures sont incluses dans les informations envoyées au coordinateur de calibrateur ; ou
placer le capteur dans un mode hors service dans lequel aucune mesure supplémentaire n'est obtenue à partir du capteur.

8. Procédé selon la revendication 7, dans lequel l'étape de recherche de l'effet d'étalonnage inclut l'étape consistant à comparer les mesures à des valeurs attendues sur la base du premier résultat et/ou du second résultat, le capteur (11, 12, ...) étant placé dans le mode de mesure lorsqu'un nombre prédéterminé de mesures successives correspond aux valeurs attendues.

9. Procédé selon l'une quelconque des revendications précédentes, dans lequel le second traitement comprend une fusion de données au moyen des informations provenant des groupes de capteurs (10), pour mettre à jour un modèle du système dont ledit un ou lesdits plusieurs paramètres sont des caractéristiques, le second résultat incluant une estimation de valeurs dudit un ou desdits plusieurs paramètres pour chaque capteur (11, 12, ...).

10. Réseau de capteurs comprenant :
une pluralité de groupes de capteurs (10), chaque groupe de capteurs présentant une pluralité de capteurs (11, 12, ...) et un coupleur de capteurs (15) ; et
un coordinateur de calibrateur (20) en communication avec les groupes de capteurs (10) ; dans lequel
le coupleur de capteurs (15) de chaque groupe de capteurs (10) est agencé de manière à obtenir des mesures de valeurs d'un ou plusieurs paramètres en provenance des capteurs (11, 12, ...), à mettre en oeuvre un premier traitement sur les mesures en vue d'obtenir au moins un premier résultat, et à acheminer des informations au coordinateur de calibrateur ; et
le coordinateur de calibrateur (20) est agencé de manière à mettre en oeuvre un second traitement sur les informations reçues en provenance des groupes de capteurs (10), en vue d'obtenir au moins un second résultat, et à réintroduire le second résultat dans les groupes de capteurs ;
dans lequel, dans chaque groupe de capteurs (10), le coupleur de capteurs est agencé de manière à utiliser les premier et second résultats en vue d'évaluer une fiabilité des capteurs (11, 12, ...) ;
**caractérisé par** un compteur d'exposition environnementale (16) associé à chacun des capteurs respectifs (11, 12, ...), chaque compteur étant configuré de manière à caractériser les conditions environnementales et la dégradation de performances dépendante de l'environnement du capteur respectif, dans lequel le coupleur de capteurs (15) est en outre agencé de manière à utiliser la sortie du compteur d'exposition environnementale (16) en vue de déterminer une dégradation de performances dépendante de l'environnement de chaque capteur, et si cela est indiqué par la détermination, à exclure des valeurs de mesures futures du capteur des informations acheminées vers le coordinateur de calibrateur.

11. Appareil destiné à être utilisé en tant qu'un coupleur de capteurs (15) dans un système de capteurs et comprenant :
un moyen de réception connecté à une pluralité de capteurs (11, 12, ...) formant un groupe (10), et agencé de manière à obtenir des mesures de valeurs d'un ou plusieurs paramètres en provenance des capteurs ; et
un moyen de traitement agencé de manière à mettre en oeuvre un traitement des mesures en vue d'obtenir au moins un premier résultat, et à acheminer des informations à un appareil externe (20) ; et
dans lequel le moyen de réception est en outre agencé de manière à recevoir, en provenance de l'appareil externe (20), un second résultat dérivé en utilisant les informations ; et
le moyen de traitement est agencé de manière à utiliser les premier et second résultats en vue d'évaluer une fiabilité des capteurs (11, 12, ...) ; **caractérisé en ce que**
le moyen de traitement est en outre agencé de manière à déterminer une dégradation de performances dépendante de l'environnement de chaque capteur, et si cela est indiqué par la détermination, à exclure des valeurs de mesures futures du capteur des informations envoyées à l'appareil externe (20), dans lequel la dégradation de performances dépendante de l'environnement est déterminée en utilisant un compteur d'exposition environnementale (16) associé à chacun des capteurs respectifs (11, 12, ...), chaque compteur étant configuré de manière à caractériser les conditions environnementales et la dégradation de performances dépendante de l'environnement du capteur respectif.

12. Appareil selon la revendication 11, dans lequel ledit traitement comprend une fusion de capteurs desdites mesures sur la base d'un état attendu du système indiqué par le premier résultat et/ou le second résultat, le moyen de traitement détectant un problème avec un capteur (11, 12, ...) sur la base d'un écart entre une dite mesure et des valeurs d'un ou plusieurs paramètres découlant de l'état attendu.

13. Instructions lisibles par ordinateur qui, lorsqu'elles sont exécutées par des processeurs de dispositifs informatiques en réseau, mettent en oeuvre le procédé selon l'une quelconque des revendications 1 à 9.
